# EUROPEAN PATENT SPECIFICATION

(11) **EP 4 154 957 B1**
(45) Date of publication and mention of the grant of the patent: **29.01.2025**
(21) Application number: 21199491.8
(22) Date of filing: 28.09.2021
(51) Int. Cl.: B01D 1/28, C02F 1/04

(54) **USE OF A PROCESS SYSTEM COMPRISING A MECHANICAL VAPOR COMPRESSION (MVC/MVR) SUBSYSTEM AND A METHOD FOR OPERATING A PROCESS SYSTEM**
VERWENDUNG EINES PROZESSSYSTEMS MIT SUBSYSTEM FÜR MECHANISCHE DAMPFKOMPRESSION (MVC/MVR) UND VERFAHREN ZUM BETRIEB EINES PROZESSSYSTEMS
UTILISATION D'UN SYSTÈME DE TRAITEMENT COMPRENANT UN SOUS-SYSTÈME DE COMPRESSION MÉCANIQUE DE VAPEUR (MVC/MVR) ET PROCÉDÉ DE FONCTIONNEMENT D'UN SYSTÈME DE TRAITEMENT

(43) Date of publication of application: 29.03.2023
(73) Proprietor: Aquafair AB, 702 18 Örebro (SE)
(72) Inventor: CARLMAN, Fredrik, Örebro (SE); ÅHRSTRÖM, Bert-Olof, Örnsköldsvik (SE)
(74) Representative: Bjerkén Hynell KB

(56) References cited:
- EP-A1- 2 716 341
- DE-A1- 4 036 345
- GB-A- 652 888
- US-A- 4 392 877

## Description

### Technical field

The present disclosure relates to the use of a process system comprising a mechanical vapor compression (MVC/MVR) subsystem. Further, the present disclosure relates to a method for operating a process system comprising a MVC/MVR-subsystem.

### Background

Mechanical Vapor Compression (MVC) or also called Mechanical Vapor Recompression (MVR) is an evaporation method by which a blower, compressor or jet ejector is used to compress, and as a result of the compression, increase the pressure, density and temperature of the vapor produced.

As a result, the vapor can serve as the heating medium for its "mother" liquid or solution being concentrated. Without the compression, the vapor would be at the same temperature as its "mother" liquid/solution, and no heat transfer could take place.

Below some patent documents within the technical field will be briefly discussed.

In the US10793483 a system is described using a mechanical vapor recompression evaporator (MVR) to receive a liquid fraction from a centrifuge and evaporating the liquid fraction by mechanical vapor recompression to produce ammonia-laden water vapor and a concentrated nutrient slurry. The system comprises a dryer for drying the nutrient slurry to a selected moisture content to be available as an ingredient in compounded fertilizer; and an ammonia stripping tower assembly to receive ammonia-laden water vapor from the MVR and from it to precipitate ammonium sulphate salt and condense water as separate products.

In the EP2716341 a system and a method is described for liquid treatment by mechanical vapor recompression comprising a fixed fluid-tight evaporator housing. The housing comprises an inlet for feeding liquid to be evaporated into the housing and an outlet from the housing for liquid concentrated by evaporation and an outlet from the housing for discharging vapor boiled off from the liquid by evaporation. The housing comprises a plurality of heating elements within the housing mounted on a common horizontal axis, each of said heating elements having an outer surface for contact with said liquid to be evaporated within the housing and having an internal passage for heating medium and an element inlet and an element outlet for the heating medium. Another known system is disclosed in US4392877.

Although the known systems work well, there is a need of improvements regarding utilization of energy from a MVR in an efficient manner.

Thus, the general object of the present disclosure is to achieve the use of a process system comprising a mechanical vapor compression (MVC/MVR) subsystem, which process system has conditions for an improved utilization of energy produced by the MVR-subsystem. Further, an object of the present disclosure is to achieve an improved method for operating a process system comprising a MVC/MVR-subsystem, which process system can be operated in an efficient manner regarding the use of energy produced by the MVC/MVR-subsystem

### Summary

The above-mentioned objects are achieved by the present disclosure according to the independent claims.

Preferred embodiments are set forth in the dependent claims.

According to one aspect, the present disclosure relates to a process system comprising a mechanical vapor compression (MVC/MVR) subsystem arranged to receive a liquid and arranged to produce compressed vapor from the liquid and to heat the liquid being received. The process system comprises a process subsystem connected to the MVC/MVR-subsystem and arranged to receive a portion of the compressed vapor and arranged to use the portion of the compressed vapor during operation of the process subsystem.

The MVC/MVR-subsystem is configured to receive a liquid to be used in the MVC/MVR-subsystem to produce compressed vapor. Thus, the MVC/MVR-subsystem is arranged to mainly operate with a liquid as an input to the MVC/MVR-subsystem.

In the application, with the process subsystem is meant a subsystem arranged to use or to process the received compressed vapor in order to achieve that the process subsystem is constructed for.

Because the process system comprises the process subsystem connected to the MVC/MVR-subsystem, which process subsystem is arranged to receive a portion of the compressed vapor, the portion of the compressed vapor can be used in the process subsystem for the purpose of the process subsystem. Thus, depending on what is the aim/purpose of the process subsystem, the portion of the compressed vapor can be used to achieve the aim/purpose of the process subsystem.

As a result, a portion of energy produced by the MVC/MVR-subsystem can be used in the process subsystem by means of the portion of the compressed provided to the process subsystem. Thus, an improved process system is achieved comparing to the known systems, which process system has conditions for an improved use of energy produced by the MVC/MVR-subsystem. Therefore, the above mentioned object is achieved.

The process subsystem is a production subsystem configured to produce a product, wherein the portion of the compressed vapor is used to product the product. Thus, the aim/purpose of the process system is in this case for the production of a product, such as manufacturing of a product where compressed vapor are needed during manufacturing of the product.

The production subsystem is an industrial production subsystem and the product is an industrial product. Thus, the production subsystem can be, for example, a subsystem in a paper industry process, a food industry process or a steel industry process.

Alternatively, the process subsystem is a service subsystem configured to perform a service using the portion of the compressed vapor in a cleaning procedure. Thus, the portion of the compressed vapor can be used, for example, to clean a façade of a building, for cleaning cloths or for sterilization purposes in hospitals or in laboratories.

Alternatively, the process subsystem is a work generating subsystem. Thus, the portion of the compressed vapor can be used to generate work by the work generating subsystem.

Consequently, the work generating subsystem can be a machine arranged to use compressed vapor to generate work.

As an example, the work generating subsystem is a transport subsystem configured for freight- and/or public-transport. The transport subsystem can be a steam locomotive.

The MVC/MVR-subsystem is arranged as a closed loop vapor MVC/MVR-subsystem. Thus, vapor can be used in an efficient manner.

Optionally, the MVC/MVR-subsystem is a MVC/MVR liquid purification subsystem.

Thus, an improved process system is provided having conditions for producing pure liquid by means of the MVC/MVR-subsystem and for using the portion of the compressed vapor during operation of the process subsystem.

Optionally, the MVC/MVR liquid purification subsystem is a MVC/MVR water desalination subsystem.

Optionally, the liquid is water and the heated liquid is heated cleaned water. Thus, a yet improved process system is provided having conditions for producing pure fresh water by means of the MVC/MVR-subsystem and for using the portion of the compressed vapor during operation of the process subsystem.

According to a further aspect the present disclosure relates to a method for operating a process system comprising a mechanical vapor compression subsystem arranged to receive a liquid and arranged to produce compressed vapor from the liquid and to heat the liquid being received. The method comprises:
- connecting a process subsystem to the MVC/MVR-subsystem and
- providing a portion of the compressed vapor produced by the MVC/MVR-subsystem to the process subsystem, wherein the portion of the compressed vapor is to be used during operation of the process subsystem.

Because the process subsystem is connected to the MVC/MVR-subsystem, and because the method comprises the step of providing the portion of the compressed vapor to the process subsystem, the portion of the compressed vapor can be used in the process subsystem for the aim/purpose of process subsystem. Thus, depending on what is the aim/purpose of the process subsystem, the portion of the compressed vapor can be used to achieve the aim/purpose of the process subsystem.

Thus, the process subsystem can utilize a portion of energy produced by the MVC/MVR-subsystem by using the portion of the compressed vapor produced in the MVC/MVR-subsystem in the process subsystem.

Consequently, an improved method for operating a process system is provided and therefore, the above mentioned object is achieved.

The process subsystem is a production subsystem configured to produce an industrial product, wherein the method comprises to produce the product by the production subsystem. Thus, the aim/purpose of the process subsystem is in this case the use for production of a product, where compressed vapor are needed during manufacturing of the product.

Alternatively, the process subsystem is a service subsystem configured to perform a service using the portion of the compressed vapor, wherein the method comprises to provide a service by the service subsystem in a cleaning procedure. Thus, the portion of the compressed vapor can be used, for example, to clean a façade of a building, for cleaning cloths or for sterilization purposes in hospitals or in laboratories.

Alternatively, the process subsystem is a work generating subsystem, wherein the method comprises to provide work by the work generating subsystem. Thus, the portion of the compressed vapor can be used to generate work in the work generating subsystem. Consequently, the work generating subsystem can be a machine arranged to use compressed vapor to generate work.

### Brief description of the drawings

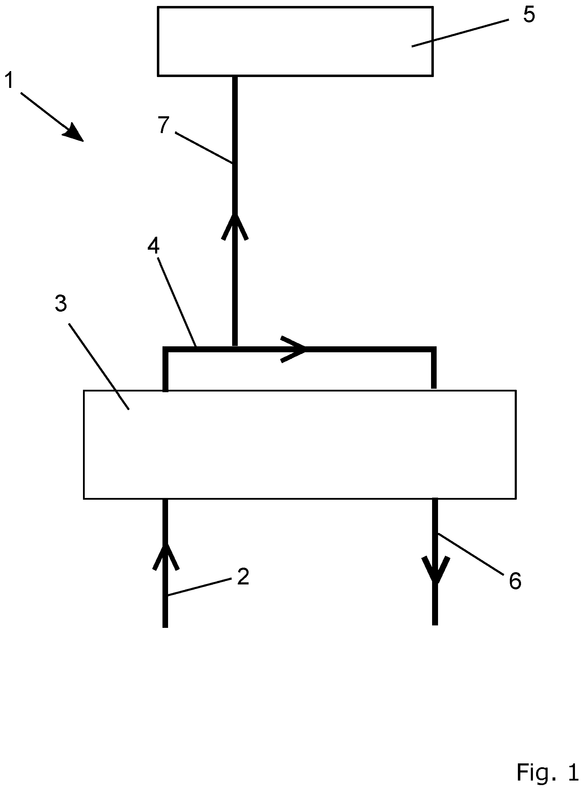

Fig. 1 shows a schematic illustration of a process system according to an embodiment.

### Detailed description

A process system with a MVC/MVR-subsystem will now be described in details with references to the appended figures. Throughout the figures the same, or similar, items have the same reference signs. Moreover, the items and the figures are not necessarily to scale, emphasis instead being placed upon illustrating the principles of the invention.

With reference to Fig. 1, a process system 1 comprising a mechanical vapor compression (MVC) or also called mechanical vapor recompression (MVR) subsystem 3 is illustrated according to some embodiments.

The MVC/MVR-subsystem 3 is a common knowledge in the art and is therefore not described herein in details.

The process system 1 comprises a mechanical vapor compression (MVC/MVR) subsystem 3. arranged to receive a liquid and arranged to produce compressed vapor from the liquid and to heat the liquid being received. The liquid is supplied to the MVC/MVR-subsystem 3 through a liquid supply line 2. The compressed vapor are transported through a compressed vapor line 4. The heated liquid is transported through a heated liquid line 6.

The liquid may be water or the liquid may be any other liquid or mixture of liquids and/or other materials e.g. solids, polymers, fatty alcohols, oils, additives, soluble or insoluble particles and molecular systems including ionic fluids. The heated liquid may then be a heated cleaned water. Thus, the MVC/MVR-subsystem 3 may be a MVC/MVR liquid purification subsystem, particularly a MVC/MVR water desalination subsystem.

According to the embodiments illustrated in Fig. 1, the process system 1 comprises a process subsystem 5 connected to the MVC/MVR-subsystem 3 by means a compressed vapor portion line 7 illustrated with a line. Thus, the process subsystem 5 can utilize a portion of energy produced by the MVC/MVR-subsystem 3 by using directly a portion of the compressed vapor. Thus, the process subsystem 5 can be directly connected to the MVC/MVR-subsystem 3 by means of the compressed vapor portion line 7 supplying the portion of the compressed vapor to the process subsystem 5.

Consequently, a portion of energy produced by the MVC/MVR-subsystem 3 can be used by direct connection of the process subsystem 5 to the MVC/MVR-subsystem 3.

The process subsystem 5 may be a production subsystem configured to produce a product, wherein the portion of the compressed vapor can be used to product the product. Thus, the aim/purpose of the process subsystem 5 can be production of a product, such as manufacturing of a product where compressed vapor are needed during manufacturing of the product. The aim/purpose of the process subsystem 5 can also be preparation of a substance. Further, the product may be an industrial product. Thus, the production subsystem 5 can be, for example, a subsystem in a paper industry process, a food industry process or a steel industry process where compressed vapor is needed for the mentioned processes. In the case of preparation of a substance, the production subsystem can be, for example, a subsystem in a petroleum industry process where compressed vapor is needed during processing of oil.

According to some embodiments, the process subsystem 5 is a service subsystem configured to perform a service using the portion of the compressed vapor such as a cleaning procedure. Thus, the portion of the compressed vapor can be used, for example, to clean a façade of a building, for cleaning cloths or for sterilization purposes in hospitals or in laboratories. The compressed vapor can then be supplied through suitable conduits and nozzles of the process subsystem 5.

According to some further embodiments, the process subsystem 5 is a work generating subsystem. Thus, the portion of the compressed vapor can be used to generate work by the work generation subsystem. Consequently, the work generating subsystem can be a machine arranged to use compressed vapor to generate work. The work generating subsystem may be a transport subsystem configured for freight- and/or public-transport, such as a steam locomotive.

Through the application the arrows illustrate the flow direction in the respective line.

## Claims

1. Use of a process system (1) comprising:
- a mechanical vapor compression (MVC/MVR) subsystem (3) and
- a process subsystem (5) connected to said MVC/MVR-subsystem (3),
wherein the MVC/MVR-subsystem (3)is arranged to receive a liquid supplied to an evaporator of the MVC/MVR-subsystem (3) through a liquid supply line (2) and is arranged to produce compressed vapor from said liquid and to heat the liquid being received, wherein the MVC/MVR-subsystem (3) is arranged as a closed loop vapor MVC/MVR-subsystem (3) comprising a compressed vapor line (4) and being arranged to reuse the produced compressed vapor being produced in a compressor of the MVC/MVR-subsystem (3) and being provided back through the compressed vapor line (4) to evaporate the liquid and to condense to form a condensed liquid being transported through a heated liquid line (6),
**characterized in that** the process subsystem (5) is connected to said MVC/MVR-subsystem (3) and is arranged to receive a portion of said compressed vapor provided to the process subsystem (5) through a compressed vapor portion line (7) connected to the compressed vapor line (4), wherein the portion of the compressed vapor is used in the process subsystem (5) during operation of the process subsystem (5) to produce an industrial product or to perform a cleaning procedure or to generate work such as propulsion in freight- and/or public-transport.

2. Use of the process system (1) according to any of claim 1, wherein the MVC/MVR-subsystem (3) is a MVC/MVR liquid purification subsystem.

3. Use of the process system (1) according to claim 2, wherein the MVC/MVR liquid purification subsystem is a MVC/MVR water desalination subsystem.

4. A method for operating a process system (1) comprising a mechanical vapor compression (MVC/MVR) subsystem (3) being arranged to receive a liquid supplied to an evaporator of the MVC/MVR-subsystem (3) through a liquid supply line (2) and being arranged to produce compressed vapor from said liquid and to heat the liquid being received, wherein the MVC/MVR-subsystem (3) is arranged as a closed loop vapor MVC/MVR-subsystem (3) comprising a compressed vapor line (4) and being arranged to reuse the produced compressed vapor, produced in a compressor of the MVC/MVR-subsystem (3), and being provided back through the compressed vapor line (4) to evaporate the liquid and to condense to form a condensed liquid being transported through a heated liquid line (6)
**characterized in that**
the method comprises:
- connecting a process subsystem (5) to said MVC/MVR-subsystem (3) via a compressed vapor portion line (7) connected to the compressed vapor line (4) and
- providing a portion of said compressed vapor produced by the MVC/MVR-subsystem (3) to said process subsystem (5), wherein said portion of the compressed vapor is to be used during operation of the process subsystem (5) to produce an industrial product or to perform a cleaning procedure or to generate work such as propulsion in freight- and/or public-transport.

5. The method according to claim 4, wherein the MVC/MVR-subsystem (3) is a MVC/MVR liquid purification subsystem.

6. The method according to claim 5, wherein the MVC/MVR liquid purification subsystem is a MVC/MVR water desalination subsystem.

## Patentansprüche

1. Verwendung eines Prozesssystems (1), umfassend:
- ein Subsystem (3) für mechanische Dampfkompression (MVC/MVR) und
- ein Prozess-Subsystem (5), das mit dem MVC/MVR-Subsystem (3) verbunden ist,
wobei das MVC/MVR-Subsystem (3) angeordnet ist zum Aufnehmen einer Flüssigkeit, die einem Verdampfer des MVC/MVR-Subsystems (3) über eine Flüssigkeitszufuhrleitung (2) zugeführt wird, und angeordnet ist zum Erzeugen von komprimiertem Dampf aus der Flüssigkeit und zum Erwärmen der aufgenommenen Flüssigkeit, wobei das MVC/MVR-Subsystem (3) als ein MVC/MVR-Subsystem (3) mit geschlossenem Dampfkreislauf angeordnet ist, umfassend eine Leitung (4) für komprimierten Dampf und angeordnet zum Wiederverwenden des erzeugten komprimierten Dampfes, der in einem Kompressor des MVC/MVR-Subsystems (3) erzeugt und durch die Leitung (4) für komprimierten Dampf zurückgeführt wird, um die Flüssigkeit zu verdampfen und zu kondensieren, um eine kondensierte Flüssigkeit zu bilden, die durch eine erwärmte Flüssigkeitsleitung (6) transportiert wird,
**dadurch gekennzeichnet, dass** das Prozess-Subsystem (5) mit dem MVC/MVR-Subsystem (3) verbunden und angeordnet ist zum Aufnehmen eines Teils des komprimierten Dampfes, der dem Prozess-Subsystem (5) durch eine Leitung (7) für einen Teil des komprimierten Dampfes zugeführt wird, die mit der Leitung (4) für komprimierten Dampf verbunden ist, wobei der Teil des komprimierten Dampfes während des Betriebes des Prozess-Subsystems (5) in dem Prozess-Subsystem (5) verwendet wird, um ein industrielles Produkt herzustellen oder um einen Reinigungsvorgang durchzuführen oder um Arbeit zu erzeugen, beispielsweise einen Antrieb im Fracht- und/oder öffentlichen Verkehr.

2. Verwendung des Prozesssystems (1) nach Anspruch 1, wobei das MVC/MVR-Subsystem (3) ein MVC/MVR-Flüssigkeitsreinigungs-Subsystem ist.

3. Verwendung des Prozesssystems (1) nach Anspruch 2, wobei das MVC/MVR-Flüssigkeitsreinigungs-Subsystem ein MVC/MVR-Wasserentsalzungs-Subsystem ist.

4. Verfahren zum Betrieb eines Prozesssystems (1), umfassend ein Subsystem (3) für mechanische Dampfkompression (MVC/MVR), das angeordnet ist zum Aufnehmen einer Flüssigkeit, die einem Verdampfer des MVC/MVR-Subsystems (3) über eine Flüssigkeitszufuhrleitung (2) zugeführt wird, und angeordnet ist zum Erzeugen von komprimiertem Dampf aus der Flüssigkeit und zum Erwärmen der aufgenommenen Flüssigkeit, wobei das MVC/MVR-Subsystem (3) als ein MVC/MVR-Subsystem (3) mit geschlossenem Dampfkreislauf angeordnet ist, umfassend eine Leitung (4) für komprimierten Dampf und angeordnet zum Wiederverwenden des erzeugten komprimierten Dampfes, der in einem Kompressor des MVC/MVR-Subsystems (3) erzeugt und durch die Leitung (4) für komprimierten Dampf zurückgeführt wird, um die Flüssigkeit zu verdampfen und zu kondensieren, um eine kondensierte Flüssigkeit zu bilden, die durch eine erwärmte Flüssigkeitsleitung (6) transportiert wird,
**dadurch gekennzeichnet, dass**
das Verfahren umfasst:
- Verbinden eines Prozess-Subsystems (5) mit dem MVC/MVR-Subsystem (3) über eine Leitung (7) für einen Teil des komprimierten Dampfes, die mit der Leitung (4) für komprimierten Dampf verbunden ist, und
- Zuführen eines Teils des durch das MVC/MVR-Subsystem (3) erzeugten komprimierten Dampfes an das Prozess-Subsystem (5), wobei der Teil des komprimierten Dampfes während des Betriebes des Prozess-Subsystems (5) verwendet werden soll, um ein industrielles Produkt herzustellen oder um einen Reinigungsvorgang durchzuführen oder um Arbeit zu erzeugen, beispielsweise einen Antrieb im Fracht- und/oder öffentlichen Verkehr.

5. Verfahren nach Anspruch 4, wobei das MVC/MVR-Subsystem (3) ein MVC/MVR-Flüssigkeitsreinigungs-Subsystem ist.

6. Verfahren nach Anspruch 5, wobei das MVC/MVR-Flüssigkeitsreinigungs-Subsystem ein MVC/MVR-Wasserentsalzungs-Subsystem ist.

## Revendications

1. Utilisation d'un système de traitement (1) comprenant :
- un sous-système de compression mécanique de vapeur (MVC/MVR) (3) et
- un sous-système de traitement (5) raccordé audit sous-système MVC/MVR (3), dans lequel le sous-système MVC/MVR (3) est agencé pour recevoir un liquide alimenté vers un évaporateur du sous-système MVC/MVR (3) par l'intermédiaire d'une conduite d'alimentation en liquide (2) et est agencé pour produire de la vapeur comprimée à partir dudit liquide et pour chauffer le liquide reçu, dans lequel le sous-système MVC/MVR (3) est agencé comme un sous-système MVC/MVR (3) à vapeur en boucle fermée comprenant une conduite de vapeur comprimée (4) et qui est agencé pour réutiliser la vapeur comprimée produite qui est produite dans un compresseur du sous-système MVC/MVR (3) et qui est renvoyée à travers la conduite de vapeur comprimée (4) pour évaporer le liquide et pour se condenser afin de former un liquide condensé qui est transporté à travers une conduite de liquide chauffé (6),
**caractérisé en ce que** le sous-système de traitement (5) est raccordé audit sous-système MVC/MVR (3) et est agencé pour recevoir une portion de ladite vapeur comprimée fournie au sous-système de traitement (5) par l'intermédiaire d'une conduite de portion de vapeur comprimée (7) raccordée à la conduite de vapeur comprimée (4), dans lequel la portion de la vapeur comprimée est utilisée dans le sous-système de traitement (5) pendant le fonctionnement du sous-système de traitement (5) pour produire un produit industriel ou pour réaliser une procédure de nettoyage ou pour générer une tâche telle que la propulsion dans le transport de marchandises et/ou les transports collectifs.

2. Utilisation du système de traitement (1) selon la revendication 1, dans laquelle le sous-système MVC/MVR (3) est un sous-système de purification de liquide MVC/MVR.

3. Utilisation du système de traitement (1) selon la revendication 2, dans laquelle le sous-système de purification de liquide MVC/MVR est un sous-système de dessalement d'eau MVC/MVR.

4. Procédé de fonctionnement d'un système de traitement (1) comprenant un sous-système de compression mécanique de vapeur (MVC/MVR) (3) qui est agencé pour recevoir un liquide alimenté vers un évaporateur du sous-système MVC/MVR (3) par l'intermédiaire d'une conduite d'alimentation en liquide (2) et qui est agencé pour produire de la vapeur comprimée à partir dudit liquide et pour chauffer le liquide reçu, dans lequel le sous-système MVC/MVR (3) est agencé comme un sous-système MVC/MVR (3) à vapeur en boucle fermée comprenant une conduite de vapeur comprimée (4) et qui est agencé pour réutiliser la vapeur comprimée produite, produite dans un compresseur du sous-système MVC/MVR (3) et qui est renvoyée à travers la conduite de vapeur comprimée (4) pour évaporer le liquide et pour se condenser afin de former un liquide condensé qui est transporté à travers une conduite de liquide chauffé (6), **caractérisé en ce que** le procédé comprend :
- le raccordement d'un sous-système de traitement (5) audit sous-système MVC/MVR (3) par l'intermédiaire d'une conduite de portion de vapeur comprimée (7) raccordée à la conduite de vapeur comprimée (4) et
- la fourniture d'une portion de ladite vapeur comprimée produite par le sous-système MVC/MVR (3) audit sous-système de traitement (5), dans lequel ladite portion de la vapeur comprimée doit être utilisée pendant le fonctionnement du sous-système de traitement (5) pour produire un produit industriel ou pour réaliser une procédure de nettoyage ou pour générer une tâche, telle qu'une propulsion dans le transport de marchandises et/ou les transports collectifs.

5. Procédé selon la revendication 4, dans lequel le sous-système MVC/MVR (3) est un sous-système de purification de liquide MVC/MVR.

6. Procédé selon la revendication 5, dans lequel le sous-système de purification de liquide MVC/MVR est un sous-système de dessalement d'eau MVC/MVR.
